# EUROPEAN PATENT APPLICATION

(11) **EP 3 276 719 A1**
(43) Date of publication of application: **31.01.2018**
(21) Application number: 16020278.4
(22) Date of filing: 27.07.2016
(51) Int. Cl.: H01M 6/04, H01M 6/14

(54) **GRAVITATIONAL/DIFFUSIONAL ELECTROLYTIC BATTERY CELL**

(71) Applicant: CERAGOS Electronics & Nature, 06800 Cagnes-sur-Mer (FR)
(72) Inventor: CERASANI, Umberto, 06800 CAGNES-SUR-MER (FR)

(57) **Abstract**

**1- Summary**

The first gravity cell was invented by John Frederic Daniell in 1836. It was made of two electrolyte with different density (CuSO₄ for the anode and ZnSO_{4/}H₂SO₄ for the cathode).

Another type of cells is based on the Soret's effect that generates an electric potential when the opposite sides of an electrolyte are maintained at a different temperature.

This new type of (battery) cell is based on an electric potential that will appear between the top and bottom surface of the cell due to the difference of concentration between anions and cathions due to opposing gravitational and Diffusion effects.

This Gravitational-Diffusional Electrolytic cell simply use one electrolyte (typically in acqueous solvent) and do not involve any Redox reaction. Several electrolytes can be used including organic ones provided their conductivity is high.

Even if it can be easily transported it does not require to be charged (permanent) and simple enough to be cost effective.

## Description

### 1- History

The first gravity cell was invented by John Frederic Daniell in 1836. It was made of two electrolyte with different density (CuSO₄ for the anode and ZnSO₄/H₂SO₄ for the cathode). This type of cell did not support shaking to avoid mixing of electrolytes. It was used for powering telegraph circuits up to recently.

Another type of cells is based on the Soret's effect that generates an electric potential when the opposite sides of an electrolyte are maintained at a different temperature. Several studies on this effect are presently conducted.

### 2- Presentation

This Gravitational-Diffusional Electrolytic (Battery) Cell is based on the following principle:
- Electrolyte will dissolve in solvent (typically water) and then anions (positive ions) and cathions (negative ions) will be separated
- Due to Gravitational Force (weight) they will both sink toward the bottom of the electrolyte container
- But as the anions and cathions will concentrate at the bottom and consequently rarefy at the top a Diffusion Force will be generated that will drive the ions upwards and then compensate the Gravitational force.
- At equilibrium both forces equalize but an electrical potential appears between top and bottom surfaces due to difference of concentration between different types of ions.

### 3- Description

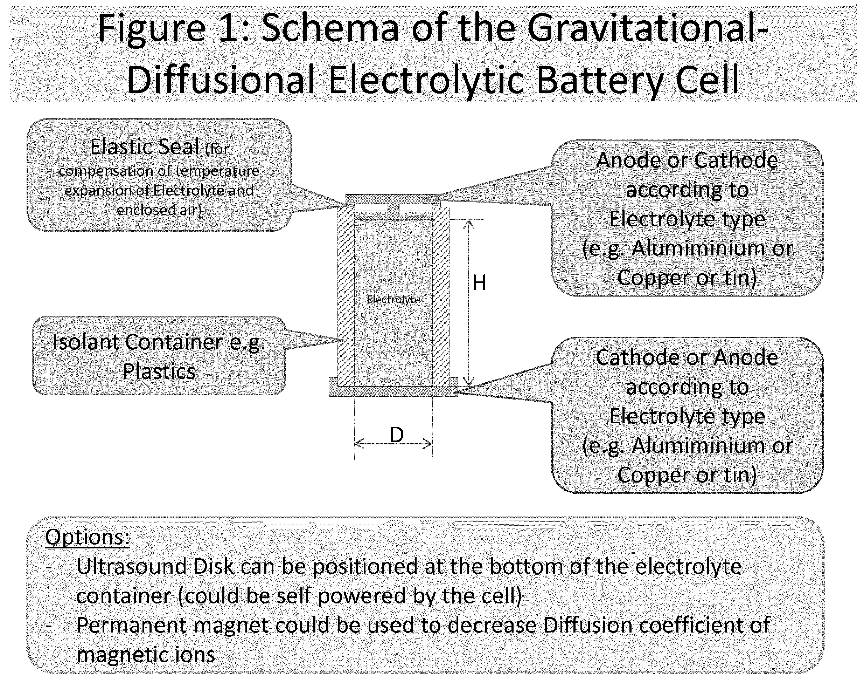

The Gravitational-Diffusional Electrolytic (Battery) cells are made of three main parts (see joined figure 1):
- A isolant container filled with electrolyte whose type can be one of the previously listed chemicals
- An Anode or cathode (according to the type of electrolyte) covering the whole surface of the container bottom. It can be made of Copper or Aluminium
- A cathode or anode (opposite pole) almost covering the whole surface of the electrolyte and fixed to the container using an elastic seal to compensate for thermal expansion of electrolyte (including enclosed air). It can also be made of Copper or Aluminium or many other metals.

Two optional features can be added:
- Ultrasound Disk at the bottom of the container to avoid deposition of electrolyte with time. Ultrasound emitter could be powered by the cell itself
- Magnetic field can be used to decrease Diffusion speed of magnetic ions

## Claims

1. This battery cell is based on the Gravitational and counter Diffusional forces appearing in an Electrolyte dissolved in a solvent (typically in water but not exclusively).
It uses one electrolyte and do not involve any Redox reaction but requires the separation of theelectrolyte into anions and cathions. It does not need to be charged and does not imply exhaustion of Electrolyte or anode and cathode materials.
Several electrolytes can be used such as Potassium Sulfide: K₂S, Calcium Chloride: CaCL₂, Potassium Carbonate: K₂CO₃, Potassium Chlorure: KCl, Sodium Ferrocyanide: Na₄Fe(CN)₆, Potassium FerriCyanide K₃Fe(CN)₆, Lead Nitrate: Pb(NO₃)₂, and even Sodium Chloride (with much less efficiency): NaCl can be used.
Acids are also efficient electrolytes but require manufacturing and handling safety procedures. Organical electrolytes could be advantageously used due their ions weight but their conductivity needs to be high. This type of cells offer the following advantages compared to the current ones:
- They do not need to charged or replaced (lifetime superior to several years)
- They are simple enough to be cost effective
- The electrolyte and other materials used can be environment friendly
However they cannot be transported (at least easily) due to variation of ions concentration.

## Amended claims

### Amended claims in accordance with Rule 137(2) EPC.

1. This battery cell is housed in an insulating case and made of two metallic electrodes separated by a single organic or inorganic electrolyte solution in between.
This battery cell does not require the electrodes to be made of different material/metal (e.g. when using a redox reaction), and does not require a separator inside the electrolyte solution (e.g. like in Supercapacitors also called Electric Double-Layer Capacitors (EDLCs)).
Example of electrolytes that can be used: Potassium Sulfide-K₂S, Calcium Chloride-CaCL₂, Potassium Carbonate: K₂CO₃, Potassium Chlorure-KCl, Sodium Ferrocyanide-Na₄Fe(CN)₆, Potassium FerriCyanide-K₃Fe(CN)₆, Lead Nitrate-Pb(NO₃)₂, and even Sodium Chloride (with much less efficiency)-NaCl.
